(19) **Europäisches Patentamt / European Patent Office / Office européen des brevets**

(11) **EP 2 614 598 B1**

(12) **FASCICULE DE BREVET EUROPEEN**

(45) Date de publication et mention
de la délivrance du brevet:
**13.04.2016 Bulletin 2016/15**

(21) Numéro de dépôt: **10771494.1**

(22) Date de dépôt: **08.09.2010**

(51) Int Cl.:
*H04B 3/54* (2006.01)  *H02H 7/26* (2006.01)
*H02J 13/00* (2006.01)

(86) Numéro de dépôt international:
**PCT/FR2010/051872**

(87) Numéro de publication internationale:
**WO 2012/032228 (15.03.2012 Gazette 2012/11)**

(54) **PROCEDE DE TELEPROTECTION DE RESEAU ELECTRIQUE A COURANTS PORTEURS EN LIGNE**

VERFAHREN ZUR FERNPROTEKTION VON LEISTUNGSNETZ

METHOD FOR TELE-PROTECTION OF POWER LINE NETWORK

(84) Etats contractants désignés:
**AL AT BE BG CH CY CZ DE DK EE ES FI FR GB
GR HR HU IE IS IT LI LT LU LV MC MK MT NL NO
PL PT RO SE SI SK SM TR**

(43) Date de publication de la demande:
**17.07.2013 Bulletin 2013/29**

(73) Titulaire: **General Electric Technology GmbH
5400 Baden (CH)**

(72) Inventeurs:
• **COULON, Antoine
F-34000 Montpellier (FR)**

• **FONTENELLE, François
F-91190 Gif sur Yvette (FR)**
• **CASTAING, Joséphine
F-75015 Paris (FR)**

(74) Mandataire: **Ilgart, Jean-Christophe et al
BREVALEX
95, rue d'Amsterdam
75378 Paris Cedex 8 (FR)**

(56) Documents cités:
**EP-A1- 1 850 439      EP-A1- 2 211 479
US-A1- 2003 081 634**

EP 2 614 598 B1

## Description

Domaine technique et art antérieur

L'invention concerne un procédé de téléprotection de réseau électrique qui met en oeuvre la technologie des courants porteurs en ligne ou technologie CPL (« CPL » pour « Courants Porteurs en Ligne »).

La technologie des courants porteurs en ligne a pour but de faire passer de l'information, à bas débit ou à haut débit, sur les lignes électriques d'un réseau en utilisant des techniques de modulation avancées.

Des signaux de différentes natures sont échangés entre les stations ou les sous-stations des réseaux qui utilisent la technologie CPL. Ces signaux utilisent comme canal de transmission les lignes de transport d'énergie du réseau. C'est le cas, par exemple, des signaux de téléprotection qui assurent des échanges d'informations de commande entre les stations ou les sous-stations des réseaux. Ces signaux de téléprotection sont émis et/ou reçus par des équipements de téléprotection qui appartiennent aux stations ou sous-stations.

Les performances essentielles à garantir pour le transfert des signaux de téléprotection sont:

- un temps de transfert rapide (typiquement quelques millisecondes),
- une bonne fiabilité et une bonne sécurité du transfert en présence de bruit, et
- une complète disponibilité du support de transmission.

La manière usuelle d'échanger des commandes de téléprotection entre stations ou sous-stations sur une ligne est d'utiliser un canal audio sur lequel est transmis en permanence une fréquence ou une combinaison de fréquences appelée signal de garde. Quand une commande de téléprotection doit être transmise, le signal de garde est supprimé et une combinaison spécifique de fréquences est émise sur le canal audio durant un temps généralement bref (typiquement quelques millisecondes).

Ces dernières années ont vu l'émergence et le développement rapide de techniques CPL digitales qui utilisent des modulations numériques telles que, par exemple, la modulation d'amplitude en quadrature (QAM : « Quadrature Amplitude Modulation » en langue anglaise) ou le multiplexage par répartition orthogonale de la fréquence (OFDM : « Orthogonal Frequency Division Multiplexing » en langue anglaise).

La brochure technique TB164 du CIGRE (« Conseil International des Grands Réseaux Electriques ») recommande fortement d'éviter la transmission des commandes de téléprotection en tant qu'information numérique sur un canal CPL digital.

Les solutions actuelles pour transmettre les commandes de téléprotection sur les canaux CPL digitaux consistent à utiliser une partie de la bande passante des canaux pour la téléprotection. La bande passante utile du canal numérique s'en trouve en conséquence réduite puisqu'une partie de celle-ci est alors dédiée au signal de garde. La réduction de la bande passante utile du canal numérique présente de réels inconvénients tels que, par exemple, une réduction du débit des données numériques.

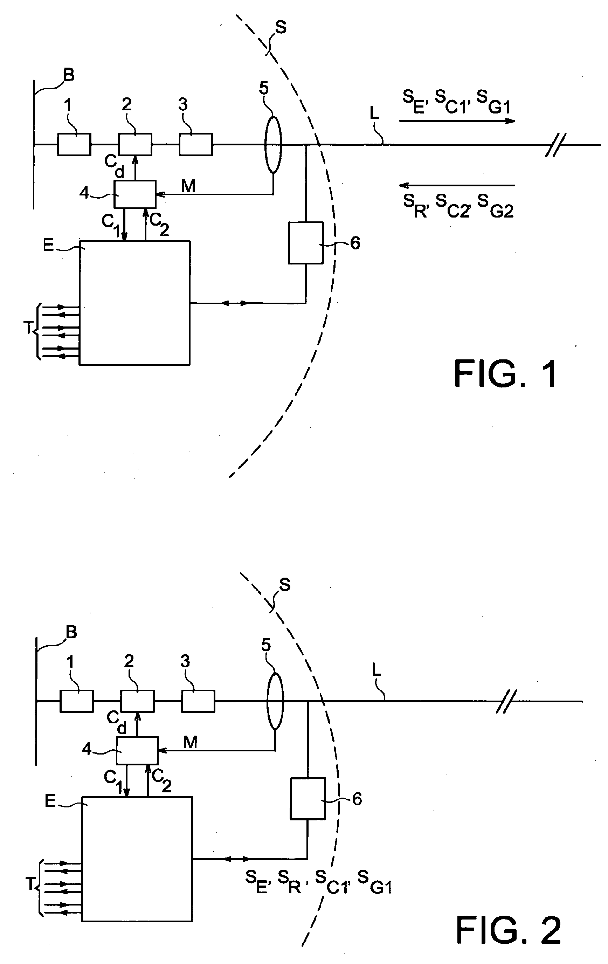

La figure 1 représente, à titre d'exemple, une vue générale d'une sous-station munie d'un équipement de téléprotection selon l'art antérieur.

La sous-station S est reliée à une autre sous-station S' (non représentée sur la figure 1) par une ligne triphasée L, par exemple une ligne haute tension. La sous-station S comprend, entre autres, un jeu de barre B, un sectionneur 1, un disjoncteur 2, un circuit bouchon 3, un relais de protection 4, un dispositif de mesure 5, un dispositif de couplage 6 et un équipement de téléprotection CPL E. La ligne L n'est pas utilisée seulement pour transmettre de la puissance entre les sous-stations S et S', mais également pour transmettre des signaux modulés numériquement $S_E$, $S_R$, des signaux de commande de téléprotection $S_{C1}$, $S_{C2}$ qui véhiculent les commandes de protection respectives $C_1$, $C_2$ et les signaux de garde $S_{G1}$, $S_{G2}$ qui sont associés aux commandes de protection.

L'équipement de téléprotection E comprend des circuits destinés à moduler/démoduler numériquement des données de télécommunication T et des circuits aptes à émettre/recevoir les signaux de garde $S_{G1}$, $S_{G2}$ et les signaux de commande $S_{C1}$, $S_{C2}$ en fonction de l'état logique des commandes C1 et C2.

Les signaux $S_E$, $S_R$, $S_{C1}$, $S_{C2}$, $S_{G1}$ et $S_{G2}$ sont couplés à la ligne de transmission L via le dispositif de couplage 6, le circuit bouchon 3 ayant pour fonction de limiter la propagation de ces signaux à la seule ligne L. Le disjoncteur 2 est commandé par une commande $C_d$ délivrée par le relais de protection 4 qui est lui-même piloté par les données de mesures délivrées par le dispositif de mesure 5 et par la commande de téléprotection $C_2$ qui provient, via le signal de commande $S_{C2}$, de la sous-station S' .

Pendant le fonctionnement normal de l'équipement CPL E, c'est-à-dire lorsqu'aucune commande de téléprotection n'a besoin d'être transmise ou reçue par l'équipement E, une partie de la bande passante b des signaux $S_E$ et $S_R$ est réservée aux signaux de garde respectifs $S_{G1}$, $S_{G2}$, réduisant ainsi le débit des données numériques des signaux $S_E$ et $S_R$. Comme cela a déjà été mentionné précédemment, ceci représente un réel inconvénient.

L'invention ne présente pas cet inconvénient.

Les documents EP 1 850 439 A1 (ABB TECHNOLOGY AG, 31 octobre 2007), EP 2 211 479 A1 (ABB TECHNOLOGY AG, 28. juillet 2010) et US 2003/081634 A1 (HIGINBOTHAM WILLIAM G ET AL, 1er mai 2003) sont également connus de l'art antérieur.

Le document EP 1 850 439 A1 divulgue un procédé de téléprotection de réseau électrique à courants porteurs en ligne dans lequel un signal de garde et des signaux de commande sont transmis dans une même bande de fréquence.

Le document EP 2 211 479 A1 divulgue un procédé et un système de téléprotection de réseau électrique à courants porteurs en ligne. Le système comprend un canal de communication non-déterministe pour surveiller la qualité des communications.

Le document US 2003/0081634 divulgue un procédé et un dispositif de communication à multiplexage temporel. Le procédé est conçu pour éviter rapidement un dysfonctionnement du système de communication lors d'une perte de signal.

### Exposé de l'invention

En effet, l'invention concerne un procédé de téléprotection de réseau à courants porteurs en ligne, dans lequel un signal de garde est transmis sur une ligne qui propage un signal modulé numériquement ayant une bande passante b, le procédé comprenant, simultanément, une étape d'interruption du signal de garde et une étape de transmission, sur la ligne, d'un signal de commande de téléprotection en réponse à l'activation d'une commande, caractérisé en ce que le signal de garde est constitué par le signal modulé numériquement et le signal de commande est compris dans une bande de fréquences qui est une fraction de la bande b.

Selon une caractéristique supplémentaire de l'invention, le procédé de téléprotection comprend une étape de détection apte à déterminer si la propagation du signal modulé numériquement a été interrompue ou non sur la ligne de transmission et, si la propagation du signal a été interrompue, une étape apte à déterminer la commande de téléprotection qui est transmise sur la ligne.

Selon encore une autre caractéristique supplémentaire de l'invention, la bande passante du signal modulé numériquement est la bande [fc-b/2, fc+b/2] et le spectre du signal de commande est compris dans la bande [fc-b/2, fc$\pm\Delta$f] ou dans la bande ]fc$\pm\Delta$f, fc+b/2], avec $0 \leq \Delta f < b/2$.

Selon encore une autre caractéristique supplémentaire de l'invention, l'étape de détection apte à déterminer si la propagation du signal modulé numériquement a été interrompue ou non comprend les étapes suivantes :

- un calcul d'une puissance $P_A$ qui est la puissance d'un signal mesuré dans la bande [fc-b/2, fc$\pm\Delta$f],
- un calcul d'une puissance $P_B$ qui est la puissance d'un signal mesuré, respectivement, dans la bande ]fc$\pm\Delta$f, fc+b/2],
- une soustraction pondérée des puissances $P_A$ et $P_B$, et
- une comparaison du résultat de la soustraction avec un seuil, le résultat de la comparaison étant un signal qui indique la présence ou l'absence du signal modulé numériquement.

Selon encore une autre caractéristique supplémentaire de l'invention, la soustraction étant pondérée avec des coefficients de pondération égaux à 1, $\Delta f$ est égal à zéro et le seuil est sensiblement égal à zéro.

Selon encore une autre caractéristique supplémentaire de l'invention, la puissance $P_A$ ou $P_B$ qui correspond à la puissance du signal de commande est comparée avec une puissance minimale $P_{min}$ et le signal qui résulte de la comparaison n'indique l'absence du signal modulé numériquement que si la puissance $P_A$ ou $P_B$ qui correspond à la puissance du signal de commande est supérieure ou égale à $P_{min}$.

Selon encore une autre caractéristique supplémentaire de l'invention, l'étape apte à déterminer la commande de téléprotection comprend une étape de discrimination de la commande de téléprotection à partir du signal de commande.

Les principaux avantages du procédé de l'invention sont les suivants :

- le procédé ne nécessite pas de bande passante supplémentaire pour l'utilisation du signal de garde ;
- l'utilisation d'un signal de garde à large spectre permet d'obtenir une détection rapide de la présence de ce signal ;
- la puissance allouée au signal de garde est celle du signal modulé numériquement et peut, en conséquence, être élevée (elle peut atteindre la puissance CPL), ce qui conduit à améliorer très fortement la robustesse du système de téléprotection aux commandes intempestives pouvant survenir en présence de bruit.

### Brève description des figures

D'autres caractéristiques et avantages de l'invention apparaîtront à la lecture d'un mode de réalisation préférentiel de l'invention fait en référence aux figures jointes, parmi lesquelles :

- la figure 1 représente, à titre d'exemple, une vue générale d'une sous-station munie d'un équipement de téléprotection PLC selon l'art antérieur ;
- la figure 2 représente, à titre d'exemple, une vue générale d'une sous-station munie d'un équipement de téléprotection PLC selon l'invention ;
- la figure 3 représente le spectre d'un signal modulé numériquement transmis en tant que signal de garde sur une ligne triphasée selon l'invention;
- la figure 4 représente le spectre d'un signal de commande transmis sur une ligne de transmission triphasée selon l'invention ;
- la figure 5 représente une vue détaillée d'un exemple de réalisation de l'équipement de téléprotection de la figure 2 ;
- les figures 6A et 6B représentent deux variantes d'un détecteur qui appartient à un équipement de téléprotection conforme à l'invention.

Sur toutes les figures, les mêmes références désignent les mêmes éléments.

Exposé détaillé de modes de réalisation particuliers de l'invention

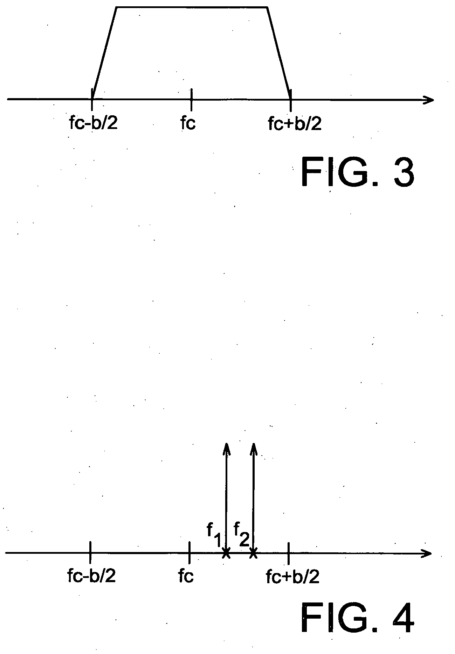

La figure 2 représente, à titre d'exemple, une vue générale d'une sous-station munie d'un équipement de téléprotection selon l'invention. Les signaux de garde sont les signaux $S_E$, $S_R$. La figure 3 représente le spectre d'un signal modulé numériquement et de bande passante b, qui est transmis en tant que signal de garde sur une ligne triphasée selon l'invention.

Le signal modulé numériquement occupe la bande passante b entre $f_c$-b/2 et $f_c$+b/2, autour d'une fréquence centrale $f_c$. La bande b est, par exemple, égale à 16kHz et la fréquence centrale $f_c$, par exemple, à 140kHz. De façon plus générale, la bande passante b est incluse dans une bande B comprise entre 20kHz et 1MHz. Comme cela apparaît sur la figure 3, le spectre du signal modulé numériquement ressemble à un spectre de bruit blanc dans une bande passante limitée.

La figure 4 représente le spectre du signal transmis en tant que signal de commande selon l'invention.

Le signal modulé numériquement est supprimé et le spectre du signal de commande est formé, par exemple, de deux fréquences $f_1$, $f_2$ situées dans la bande passante b. D'autres configurations du spectre du signal de commande sont toutefois possibles, telles que, par exemple, un spectre à N fréquences, N étant un entier supérieur ou égal à 1. Dans l'exemple de la figure 4, les deux fréquences $f_1$, $f_2$ sont transmises dans la bande [fc, fc+b/2], laissant la bande ]fc-b/2, fc] vide.

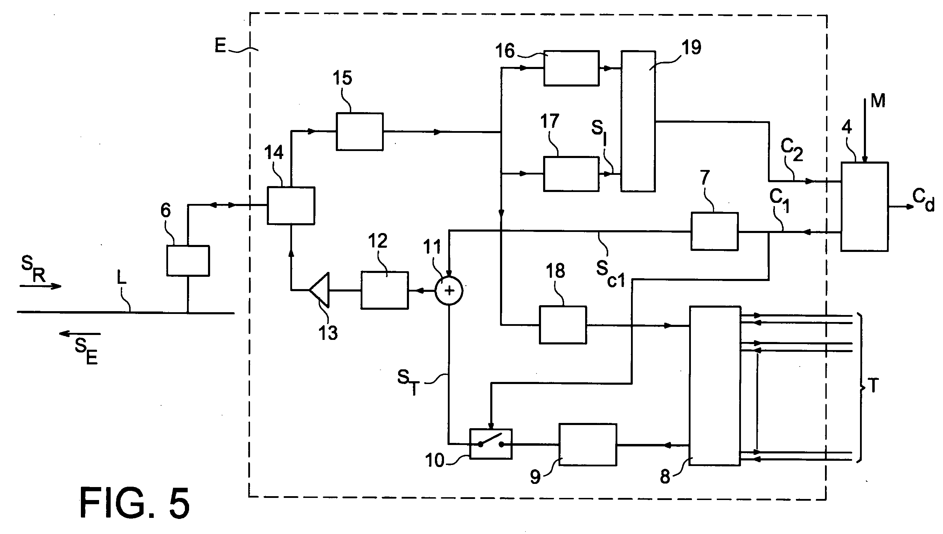

La figure 5 représente une vue détaillée de l'équipement de téléprotection de la figure 2.

L'équipement de téléprotection comprend un générateur de commande 7, un multiplexeur/démultiplexeur 8, un modulateur numérique 9, un commutateur 10, un dispositif d'addition 11, un modulateur analogique 12, un amplificateur 13, un circuit hybride 14, un démodulateur analogique 15, un discriminateur 16, un détecteur 17, un démodulateur numérique 18 et une unité de décision 19. Le détecteur 17 est apte à identifier si le signal modulé numériquement provenant de la sous-station S' est présent ou absent. Le générateur de commande 7 est apte à délivrer un signal de commande $S_{C1}$ à partir de la commande de téléprotection $C_1$ délivrée par le relais de protection 4. Les données de télécommunication T délivrées par le multiplexeur 8 sont modulées numériquement par le modulateur numérique 9 de façon à former le signal modulé numériquement de bande passante b. La sortie du modulateur numérique 9 est reliée à l'entrée du commutateur 10 et la sortie du commutateur 10 est reliée à une première borne du dispositif d'addition 11, dont la deuxième borne est reliée à la sortie du générateur de commande 7. La commande C1 commande le commutateur 10. La sortie du dispositif d'addition 11 est reliée à l'entrée du modulateur analogique 12, dont la sortie est reliée à l'entrée de l'amplificateur 13. Le circuit hybride 14 a trois bornes : une première borne reliée à la sortie de l'amplificateur 13, une deuxième borne reliée à l'entrée du démodulateur analogique 15 et une troisième borne reliée à une première borne du dispositif de couplage 6, dont la deuxième borne est reliée à la ligne L. Le fonctionnement du circuit hybride 14 est tel qu'un signal provenant du dispositif de couplage 6 est dirigé vers le démodulateur analogique 15 alors qu'un signal provenant de l'amplificateur 13 est dirigé vers le dispositif de couplage 6. La sortie du démodulateur analogique est reliée à l'entrée du discriminateur 16, à l'entrée du détecteur 17 et à l'entrée du démodulateur numérique 18. La sortie du discriminateur 16 et la sortie du détecteur 17 sont reliées, chacune, à une entrée distincte de l'unité de décision 19, dont la sortie est reliée au relais de protection 4.

Un signal $S_E$ est transmis de l'équipement de téléprotection E vers la sous-station S' et un signal $S_R$ est reçu par l'équipement de téléprotection E, provenant de la sous-station S'. Les signaux $S_E$ et $S_R$ permettent l'échange d'informations entre les équipements reliés aux circuits de télécommunication T (non représentés sur la figure).

Dans un fonctionnement normal (c'est-à-dire en l'absence de commandes en provenance des relais de protection situés de part et d'autre de la ligne), les signaux de garde sont les signaux $S_E$ et $S_R$ mentionnés ci-dessus. Le commutateur 10 est fermé et le signal que délivre le modulateur numérique 9 est alors transmis sur la première borne du dispositif d'addition 11 qui ne reçoit par ailleurs aucun signal sur sa deuxième borne. Le signal modulé numériquement est modulé par le modulateur analogique 12 et transmis vers la ligne L, via l'amplificateur 13, le circuit hybride 14 et le dispositif de couplage 6. Simultanément, le signal $S_R$ est reçu par l'équipement E, provenant de la ligne L. Le signal $S_R$ est démodulé (démodulateur analogique 15) et transmis au discriminateur 16, au détecteur 17 et au démodulateur numérique 18. Dans un fonctionnement normal, le signal $S_R$ est constitué uniquement du signal modulé numériquement provenant de la sous-station S'. En conséquence, le détecteur 17 identifie que le signal modulé numériquement provenant de la sous-station S' est présent et aucune commande de téléprotection n'est délivrée par l'unité de décision 19. Le signal modulé numériquement est démodulé par le démodulateur numérique 18 et les données de télécommunication sont transmises au démultiplexeur 8.

Au cas où une commande de téléprotection doit être transmise, deux cas sont à considérer, à savoir l'émission d'une commande de S vers S' et la réception par S d'une commande provenant de S'. Ces deux cas sont décrits ci-après.

Emission d'une commande de S vers S'

Le relais de protection 4 émet une commande $C_1$. La commande $C_1$ commande le générateur de commande 7 et le commutateur 10. Le générateur de commande 7 délivre alors un signal de commande $S_{C1}$, qui est transmis vers S' via la ligne L. Simultanément, la commande $C_1$ ouvre le commutateur 10 et le flux de données numériques délivrées par le modulateur numérique 9 est interrompu. Le signal transmis $S_E$ est alors uniquement constitué du signal de commande $S_{C1}$.

Réception par S d'une commande émise par S'

Le relais de protection de la sous-station S' émet une commande $C_2$. Le signal reçu $S_R$ est alors uniquement constitué du signal de commande $S_{C2}$ provenant de la sous-station S'. Le détecteur 17 détecte que le signal modulé numériquement provenant de la sous-station S' est absent et, simultanément, le discriminateur 16 reconnaît le signal de commande $S_{C2}$ et l'unité de décision 19 délivre la commande $C_2$, laquelle est transmise au relais de protection 4 de la sous-station S.

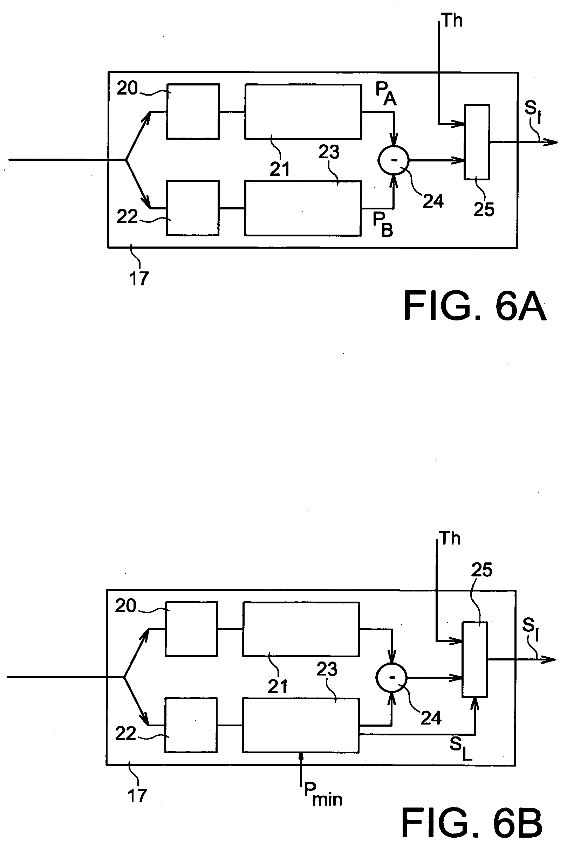

Les figures 6A et 6B représentent deux variantes du détecteur 17 qui est utilisé selon le mode de réalisation préférentiel de l'invention.

Le détecteur 17 comprend deux filtres passe-bande 20, 22, deux unités de calcul de puissance 21, 23, un circuit de soustraction 24 et un comparateur 25. Selon le mode de réalisation préférentiel de l'invention, le filtre passe-bande 20 est centré sur la bande $[f_c-b/2, f_c]$ et le filtre passe-bande 22 est centré sur la bande $]fc, f_c+b/2]$. Toutefois, d'autres modes de réalisation sont possibles dans lesquels le filtre passe-bande 20 est centré sur la bande $[f_c-b/2, f_c+\Delta f]$ ou $[f_c-b/2, f_c-\Delta f]$ et le filtre 22 respectivement centré sur la bande $]f_c+\Delta f, f_c+b/2]$ ou la bande $]f_c-\Delta f, f_c+b/2]$, $\Delta f$ étant une bande de fréquences inférieure à b/2. Les entrées des filtres passe-bande 20 et 22 sont connectées entre elles et constituent l'entrée du détecteur 17. Le filtre passe-bande 20 et l'unité de calcul de puissance 21 sont montés en série de même que le filtre passe-bande 22 et l'unité de calcul de puissance 23.

Selon le mode de réalisation préférentiel de l'invention, l'unité de calcul 21 calcule la puissance $P_A$ du signal reçu dans la bande $[f_c-b/2, f_c]$ et l'unité de calcul 23 calcule la puissance $P_B$ du signal reçu dans la bande $]f_c, f_c+b/2]$. Les deux puissances calculées $P_A$ et $P_B$ sont ensuite soustraites l'une de l'autre par le circuit de soustraction 24. De façon générale, le circuit de soustraction 24 effectue une soustraction pondérée des puissances calculées $P_A$ et $P_B$. Le résultat R de la soustraction s'écrit alors :

$$R = \alpha\ P_A - \beta\ P_B,$$

où $\alpha$ et $\beta$ sont des coefficients de pondération. Le résultat R de la soustraction est alors comparé à un seuil Th.

Selon le mode de réalisation préférentiel de l'invention, les coefficients de pondération sont égaux à 1 et le seuil Th est égal à zéro. Quand le signal de garde est présent, les puissances calculées $P_A$ et $P_B$ sont sensiblement égales ($P_A \# P_B$), même en présence de bruit blanc dans la bande de fréquences, ce bruit étant généralement éliminé par le filtrage. Il s'en suit que le signal délivré par le circuit de soustraction 24 est à peu près égal à zéro et le comparateur 25 délivre alors un signal $S_I$ qui indique la présence du signal de garde.

Par contre, quand un signal de commande est transmis dans la bande de fréquences $]f_c, f_c+b/2]$ (et alors aucun signal de garde n'est transmis sur la ligne), la puissance $P_A$ est bien toujours sensiblement égale à zéro dans la bande $[f_c-b/2, f_c]$, alors que la puissance $P_B$ n'est maintenant plus égale à zéro dans la bande $]f_c, f_c+b/2]$. Le signal délivré par le soustracteur n'est alors plus égal à zéro et le comparateur 25 délivre un signal $S_I$ qui indique l'absence du signal de garde. Dans ce cas, le discriminateur 16 extrait la commande $C_2$ du signal reçu et le signal $S_I$ délivré par le détecteur 17 autorise l'unité de décision 19 à transmettre la commande de téléprotection $C_2$ au relais de protection 4.

Selon une variante de l'invention, pour éviter une détection erronée de perte du signal de garde quand il n'y a pas de signal modulé numériquement, une condition supplémentaire sur la puissance minimum $P_{min}$ du signal contenu dans la bande de fréquence est vérifiée. La figure 6B représente cette variante de l'invention. L'unité de calcul de puissance 23 délivre alors, en plus de la valeur de la puissance $P_B$, un signal logique $S_L$ qui est appliqué sur une entrée de commande du comparateur 25. Le signal logique $S_L$ n'autorise la détection de l'absence de signal de garde que si la valeur de puissance $P_B$ calculée est supérieure ou égale à $P_{min}$. Les deux paramètres pour décider si la condition de présence du signal de garde est vérifiée sont alors Th et $P_{min}$. Ces deux paramètres sont choisis en fonction des performances requises selon les applications (temps de transfert, probabilité de fausse détection, probabilité de non détection, etc.).

Selon l'invention, c'est le signal modulé numériquement lui-même qui constitue le signal de garde. Associer la détection du signal de garde conforme à l'invention avec une mesure de puissance du signal de commande permet l'obtention d'un procédé de téléprotection rapide et robuste, même dans des conditions de bruit très élevé.

**Revendications**

1. Procédé de téléprotection de réseau électrique à courants porteurs en ligne, dans lequel un signal de garde est transmis sur une ligne (L) qui propage un signal modulé numériquement ($S_E$, $S_R$) ayant une bande passante b, le signal modulé numériquement constituant le signal de garde, le procédé comprenant une étape de transmission, sur la ligne, d'un signal de commande de téléprotection ($S_{C1}$, $S_{C2}$) en réponse à l'activation d'une commande ($C_1$, $C_2$), le signal de commande véhiculant la commande ($C_1$, $C_2$) sur la ligne de transmission et étant compris dans une bande de fréquences ($S_{C1}$, $S_{C2}$) qui est une fraction de la bande b, **caractérisé en ce que** l'étape de transmission du signal de commande de téléprotection est simultanée à une étape d'interruption du signal modulé numériquement qui survient en réponse à l'activation de ladite commande ($C_1$, $C_2$).

2. Procédé de téléprotection selon la revendication 1, **caractérisé en ce qu'**il comprend une étape de détection apte à déterminer si la propagation du signal modulé numériquement a été interrompue ou non sur la ligne de transmission et, si la propagation du signal a été interrompue, une étape apte à déterminer la commande de téléprotection (C1, C2) véhiculée par le signal de commande sur la ligne de transmission.

3. Procédé de téléprotection selon l'une des revendications 1 ou 2, dans lequel la bande passante du signal modulé numériquement est la bande [fc-b/2, fc+b/2] et le spectre du signal de commande ($S_{C1}$, $S_{C2}$) est compris dans la bande [fc$\pm\Delta$f, fc$\pm\Delta$f] ou dans la bande ]fc$\pm\Delta$f, fc+b/2], avec 0$\leq\Delta$f<b/2.

4. Procédé de téléprotection selon la revendication 3, lorsque la revendication 3 dépend de la revendication 2, dans lequel l'étape de détection apte à déterminer si la propagation du signal modulé numériquement a été interrompue ou non comprend les étapes suivantes :

   - un calcul d'une puissance $P_A$ qui est la puissance d'un signal mesuré dans la bande [fc-b/2, fc$\pm\Delta$f],
   - un calcul d'une puissance $P_B$ qui est la puissance d'un signal mesuré, respectivement, dans la bande ]fc$\pm\Delta$f, fc+b/2],
   - une soustraction pondérée des puissances $P_A$ et $P_B$, et
   - une comparaison du résultat de la soustraction avec un seuil (Th), le résultat de la comparaison étant un signal ($S_I$) qui indique la présence ou l'absence du signal modulé numériquement.

5. Procédé de téléprotection selon la revendication 4, dans lequel, la soustraction étant pondérée avec des coefficients de pondération égaux à 1, $\Delta$f est égal à zéro et le seuil (Th) est sensiblement égal à zéro.

6. Procédé de téléprotection selon l'une des revendications 4 ou 5, dans lequel la puissance $P_A$ ou $P_B$

qui correspond à la puissance du signal de commande est comparée avec une puissance minimale $P_{min}$ et le signal ($S_I$) qui résulte de la comparaison n'indique l'absence du signal modulé numériquement que si la puissance $P_A$ ou $P_B$ qui correspond à la puissance du signal de commande est supérieure ou égale à $P_{min}$.

7. Procédé de téléprotection selon la revendication 2, dans lequel l'étape apte à déterminer la commande de téléprotection (C1, C2) comprend une étape de discrimination (16) de la commande de téléprotection à partir du signal de commande.

**Patentansprüche**

1. Verfahren zur Fernprotektion von elektrischen Stromnetzen mit Trägerfrequenztechnik, wobei ein Überwachungssignal über eine Leitung (L) übertragen wird, mit der ein digital moduliertes Signal ($S_E$, $S_R$) mit einer Bandbreite b verbreitet wird, wobei das digital modulierte Signal das Überwachungssignal darstellt, wobei das Verfahren einen Schritt der Übertragung eines Fernprotektions-Steuersignals ($S_{C1}$, $S_{C2}$) über die Leitung als Reaktion auf die Aktivierung eines Befehls ($C_1$, $C_2$) umfasst, wobei das Steuersignal den Befehl ($C_1$, $C_2$) über die Übertragungsleitung überträgt und in einem Frequenzband ($S_{C1}$, $S_{C2}$) enthalten ist, das ein Anteil des Bandes b ist, **dadurch gekennzeichnet, dass** der Schritt der Übertragung des Fernprotektions-Steuersignals gleichzeitig mit einem Schritt der Unterbrechung des digital modulierten Signals erfolgt, das in Reaktion auf die Aktivierung des Befehls ($C_1$, $C_2$) erscheint.

2. Verfahren zur Fernprotektion nach Anspruch 1, **dadurch gekennzeichnet, dass** es einen Detektionsschritt umfasst, der dazu geeignet ist, zu ermitteln, ob die Verbreitung des digital modulierten Signals über die Übertragungsleitung unterbrochen wurde oder nicht und, falls die Verbreitung des Signals unterbrochen wurde, einen Schritt umfasst, der dazu geeignet ist, den Fernprotektionsbefehl (C1, C2) zu ermitteln, der mit dem Steuersignal über die Übertragungsleitung übertragen wird.

3. Verfahren zur Fernprotektion nach einem der Ansprüche 1 oder 2, wobei die Bandbreite des digital modulierten Signals das Band [fc-b/2, fc+b/2] ist und das Spektrum des Steuersignals ($S_{C1}$, $S_{C2}$) in dem Band [fc-b/2, fc$\pm\Delta$f] oder das Band ]fc$\pm\Delta$f, fc+b/2] mit 0$\leq\Delta$f<b/2 enthalten ist.

4. Verfahren zur Fernprotektion nach Anspruch 3, wobei Anspruch 3 von Anspruch 2 abhängt, wobei der Detektionsschritt, der dazu geeignet ist, zu ermitteln, ob die Verbreitung des digital modulierten Signals unterbrochen wurde oder nicht, die nachfolgenden Schritte umfasst:

- eine Berechnung einer Leistung $P_A$, welche die Leistung eines in dem Band [fc-b/2, fc$\pm\Delta$f] gemessenen Signals ist,
- eine Berechnung einer Leistung $P_B$, welche die Leistung eines in dem Band ]fc$\pm\Delta$f, fc+b/2] gemessenen Signals ist,
- eine gewichtete Subtraktion des Leistungen $P_A$ und $P_B$, und
- einen Vergleich des Ergebnisses der Subtraktion mit einem Schwellwert (Th), wobei das Ergebnis des Vergleichs ein Signal ($S_I$) ist, welches das Vorliegen bzw. Ausbleiben des digital modulierten Signals angibt.

**5.** Verfahren zur Fernprotektion nach Anspruch 4, wobei bei der gewichteten Subtraktion mit den Gewichtungskoeffizienten gleich 1 $\Delta$f gleich null ist und der Schwellenwert (Th) im Wesentlichen gleich null ist.

**6.** Verfahren zur Fernprotektion nach einem der Ansprüche 4 oder 5, wobei die Leistung $P_A$ bzw. $P_B$, welche der Leistung des Steuersignals entspricht, mit einer minimalen Leistung $P_{min}$ verglichen wird und das Signal ($S_I$), das sich aus dem Vergleich ergibt, das Ausbleiben des digital modulierten Signals nur dann angibt, wenn die Leistung $P_A$ bzw. $P_B$, welche der Leistung des Steuersignals entspricht, größer oder gleich $P_{min}$ ist.

**7.** Verfahren zur Fernprotektion nach Anspruch 2, wobei der Schritt, der dazu geeignet ist, den Fernprotektionsbefehl (C1, C2) zu ermitteln, einen Schritt des Unterscheidens (16) des Fernprotektionsbefehls ausgehend von dem Steuersignal umfasst.

**Claims**

**1.** A method for teleprotecting an electrical network with powerline communications, wherein a guard signal is transmitted on a line (L) which propagates a digitally modulated signal ($S_E$, $S_R$) having a pass-band b, the digitally modulated signal making up the guard signal, the method comprising a step of transmitting, on the line, a teleprotection control signal ($S_{C1}$, $S_{C2}$) in response to activating a control ($C_1$, $C_2$), the control signal conveying the control ($C_1$, $C_2$) on the transmission line and being comprised in a frequency band ($S_{C1}$, $S_{C2}$) which is a fraction of the band b, **characterised in that** the step of transmitting the teleprotection control signal is simultaneous to a step of interrupting the digitally modulated signal which occurs in response to activating said control ($C_1$, $C_2$).

**2.** The teleprotection method according to claim 1, **characterised in that** it comprises a detection step able to determine whether the propagation of the digitally modulated signal has been interrupted or not on the transmission line and, if the propagation of the signal has been interrupted, a step able to determine the teleprotection control ($C_1$, $C_2$) conveyed by the control signal on the transmission line.

**3.** The teleprotection method according to one of claims 1 or 2, wherein the pass-band of the digitally modulated signal is the band [fc-b/2, fc+b/2] and the spectrum of the control signal ($S_{C1}$, $S_{C2}$) is comprised in the band [fc-b/2, fc$\pm\Delta$f] or in the band ]fc$\pm\Delta$f, fc+b/2], with $0\leq\Delta f<b/2$.

**4.** The teleprotection method according to claim 3, when claim 3 depends on claim 2, wherein the detection step able to determine whether the propagation of the digitally modulated signal has been interrupted or not comprises the following steps of:

- calculating a power $P_A$ which is the power of a signal measured in the band [fc-b/2, fc$\pm\Delta$f],
- calculating a power $P_B$ which is the power of a signal measured respectively, in the band ]fc$\pm\Delta$f, fc+b/2],
- weightedly subtracting the powers $P_A$ and $P_B$, and
- comparing the result of the subtraction with a threshold (Th), the result of the comparison being a signal ($S_I$) which indicates the presence or the absence of the digitally modulated signal.

**5.** The teleprotection method according to claim 4, wherein, the subtraction being weighted with weighting coefficients equal to 1, $\Delta$f is equal to zero and the threshold (Th) is substantially equal to zero.

**6.** The teleprotection method according to one of claims 4 or 5, wherein the power $P_A$ or $P_B$ which corresponds to the power of the control signal is compared with a minimum power $P_{min}$ and the signal ($S_I$) which results from the comparison only indicates the absence of the digitally modulated signal if the power $P_A$ or $P_B$ which corresponds to the power of the control signal is higher than or equal to $P_{min}$.

**7.** The teleprotection method according to claim 2, wherein the step able to determine the teleprotection control (C1, C2) comprises a step of discriminating (16) the teleprotection control from the control signal.

## FIG. 1

## FIG. 2

FIG. 3

FIG. 4

FIG. 5

EP 2 614 598 B1

FIG. 6A

FIG. 6B

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1850439 A1
- EP 2211479 A1

- US 2003081634 A1, HIGINBOTHAM WILLIAM G
- US 20030081634 A